## Europäisches Patentamt

## European Patent Office

## Office européen des brevets

(19)

(11) Veröffentlichungsnummer: **0 090 301**
**B1**

# EUROPÄISCHE PATENTSCHRIFT

(12)

(45) Veröffentlichungstag der Patentschrift:
06.08.86

(51) Int. Cl.⁴: **C 08 G 65/20**

(21) Anmeldenummer: **83102753.7**

(22) Anmeldetag: **21.03.83**

(54) Verfahren zur Herstellung von Polytetrahydrofuranen mit Esterendgruppen.

(30) Priorität: **30.03.82 DE 3211635**

(43) Veröffentlichungstag der Anmeldung:
**05.10.83 Patentblatt 83/40**

(45) Bekanntmachung des Hinweises auf die Patenterteilung:
**06.08.86 Patentblatt 86/32**

(84) Benannte Vertragsstaaten:
**DE FR GB IT NL**

(56) Entgegenhaltungen:
**EP - A - 0 033 883**
**US - A - 4 183 821**

**CHEMICAL ABSTRACTS, Band 82, 1975, page 22, no. 157010u, Columbus, Ohio, USA**

(73) Patentinhaber: **BAYER AG, Konzernverwaltung RP Patentabteilung, D-5090 Leverkusen 1 Bayerwerk (DE)**

(72) Erfinder: **Heitz, Walter, Prof. Dr., Am Schmidtborn 5, D-3575 Kirchhain 1 (DE)**
Erfinder: **Kress, Hans-Jürgen, Scheiblerstrasse 111, D-4150 Krefeld 1 (DE)**

## Beschreibung

Die Herstellung von Polytetrahydrofuran mit Esterendgruppen aus Tetrahydrofuran und Säureanhydriden in Gegenwart üblicher kationischer Initiatoren, z. B. HSbF$_6$, CF$_3$SO$_3$H ist bekannt (z. B. DE-A 2 709 280 und 3 004 328 & EP-A 33 883).

Es wurde nun gefunden, dass die Anwesenheit von Veresterungs- oder Umesterungskatalysatoren die Umsetzungsgeschwindigkeit beeinflusst.

Gegenstand der Erfindung ist ein Verfahren zur Herstellung von Polytetrahydrofuranen mit Esterendgruppen, das dadurch gekennzeichnet ist, dass man Tetrahydrofuran, gegebenenfalls in einem inerten organischen Lösungsmittel, in Anwesenheit von 0,05 bis 5 Gew.-%, bezogen auf Tetrahydrofuran, eines kationischen Initiators und Verbindungen von Übergangsmetallen als Umesterungskatalysator und von 0,1 bis 200 Gew.-%, bezogen auf Tetrahydrofuran, Acrylsäure- und Methacrylsäurehydrid bei Temperaturen von -10 bis +70 °C polymerisiert.

In der DE-OS 2 709 280 wird beispielsweise die Ploymerisation von Tetrahydrofuran mit Essigsäureanhydrid beschrieben. Dabei bilden sich Polytetrahydrofurane mit Acetatendgruppen. Die bei der Polymerisation von Tetrahydrofuran in Gegenwart von Säureanhydriden erforderliche Übertragungsreaktion wird in ihrer Geschwindigkeit durch die Nukleophile des Säureanhydrids gesteuert. Da der pK$_s$-Wert beispielsweise der (Meth)Acrylsäure wesentlich kleiner ist als der der Essigsäure, ist nicht zu erwarten, dass auch bei Verwendung von Acrylsäure- oder Methacrylsäureanhydrid eine entsprechend schnelle Übertragungsreaktion eintritt.

Deshalb ist es erstaunlich, dass die erfindungsgemässe Umsetzung auch mit Acrylsäure – bzw. Methacrylsäureanhydrid unter Einsatz der Umesterungskatalysatoren zu entsprechend guten Ergebnissen führt.

Man kann durch Variieren der Konzentration an Tetrahydrofuran, der Menge des Säureanhydrids und durch die Wahl der Temperatur das Molekulargewicht der Polymerisate von ca. 200 bis etwa 10 000 einstellen. Man kann auch Tetrahydrofuran zuerst alleine zu hochmolekularen Produkten polymerisierten und anschliessend durch Umsetzung mit Säureanhydrid in Anwesenheit von Katalysatoren das Molekulargewicht wieder erniedrigen und die aus dem Säureanhydrid stammende Endgruppe einbauen. Die Produkte des erfindungsgemässen Verfahrens haben eine Funktionalität an ungesättigten Estergruppen von etwa 2.

Die Zeit, die bis zum vollständigen Verbrauch der Carbonsäureanhydride notwendig ist, wird durch den Zusatz von Umesterungskatalysatoren verringert.

Für das Verfahren geeignete inerte organische Lösungsmittel sind beispielsweise Chlorkohlenwasserstoffe wie Methylenchlorid, Tetrachlorkohlenstoff oder Nitroverbindungen wie Nitromethan. Im allgemeinen sind die Lösungen des Tetrahydrofurans in diesen Lösungsmitteln mindestens 10-Gew.-%ig, die höchste einsetzbare Konzentration ist reines Tetrahydrofuran.

Geeignete Initiatoren sind alle für die kationische Polymerisation von Tetrahydrofuran geeigneten Initiatoren wie Fluorsulfonsäure, Perchlorsäure, HSbF$_6$, Salze, welche Acryl- oder Trialkyloxoniumionen enthalten, Phosphorpentafluorid und Trifluormethylsulfonsäure und analoge polymere Sulfonsäuren (z. B. polymere perfluorierte alphatische Sulfonsäuren, wie sie unter der Bezeichnung Nafion [R] im Handel erhältlich sind).

Die Umesterungskatalysatoren sind Verbindungen von Übergangsmetallen, besonders bevorzugt werden Alkoholate von Elementen der dritten und vierten Nebengruppe des Periodensystems eingesetzt. Beispielsweise seien genannt: Zirkoniumalkoholate wie Zirkoniumpropylate, Titanalkoholate wie Tetrabutylorthotitanate und Lanthanalkoholate wie Lanthanisopropylat.

Im erfindungsgemässen Verfahren werden Acrylsäure- und Methacrylsäureanhydrid eingesetzt.

Die Menge an Säureanhydrid wird im allgemeinen so gewählt, dass das Molverhältnis von Tetrahydrofuran zu Säureanhydrid 1000:1 bis 1,5:1, bevorzugt 100:1 bis 2:1 ist.

Die erfindungsgemässe Umsetzung wird bevorzugt bei einer Temperatur von -10°C bis +70°C, besonders bevorzugt von bis 40°C ausgeführt.

Das Polymerisationsverfahren kann durchgeführt werden, indem man Tetrhydrofuran und gegebenenfalls das Lösungsmittel vorlegt, Initiator und Säureanhydrid zugibt und auf Umsetzungstemperatur bringt. Der Umesterungskatalysator kann entweder vor oder kurz nach der Initiierung zugegeben werden.

Das Polymerisat kann nach dem vollständigen Verbrauch des Säureanhydrids durch Zugabe einer Base, z. B. Natriumcarbonat, Wasser usw. und Entfernen des Tetrahydrofurans abgetrennt werden.

Es empfiehlt sich, unter Ausschluss von Sauerstoff und Feuchtigkeit zu polymerisieren. Bei Abwesenheit von Sauerstoff und Feuchtigkeit sind die erhaltenen Polymere stabil. Je nach Molekulargewicht sind sie niederviskose Flüssigkeiten oder wachsartige Feststoffe. Sie können durch Zusatz bekannter Inhibitoren für die radikalische Polymerisation (Phenole, Phenothiazin) stabilisiert werden. Es ist von besonderem Vorteil, die Polymerisation in Gegenwart von Inhibitoren für die radikalische Polymerisation durchzuführen.

Durch Einwirkung von Licht oder Sauerstoff und/oder durch radikalbildende Initiatoren können sie vernetzt werden und ergeben dann Produkte mit kautschukelastischen Eigenschaften.

Die unvernetzten Polymerisate können auch mit Vinylmonomeren copolymerisiert werden. Sie bewirken dann selbst eine Vernetzung der Copolymerisate und damit eine Verbesserung von deren Schlagzähigkeit.

Die erfindungsgemäss hergestellten Produkte zeigen elastische Eigenschaften. Sie können zur Herstellung von Produkten verwendet werden, die elastische Eigenschaften besitzen, z. B. Dichtungen, Reifen, Umhüllungsmaterialien usw. Weiterhin können sie mit anderen elastische Eigenschaften aufzeigenden Produkten abgemischt und verarbeitet werden.

Beispiel 1

75 ml trockenes und sauerstoffreies Tetrahydrofuran (THF) wurde mit 2 ml Methacrylsäureanhydrid (100%) sowie mit 110 mg Ionol versetzt. Die Reaktionsmischung wurde mit Methanol/Eis gekühlt. Es wurden 0,06 ml $HSbF_6$ unter Rühren zugegeben und die Mischung danach auf die Reaktionstemperatur von 40°C gebracht. Nach weiteren 20 min wurden 0,2 g Zirkoniumpropylat zugegeben.

Das Anhydrid war nach 1070 min vollständig verbraucht.

Eigenschaften des Produktes:
$M_n$=2968, f[2]=2,0, Ausbeute[3] 43,5 g

Beispiel 2

Zusammensetzung wie 1.
Umesterungskatalysator: 0,2 g Tetrabutylorthotitanat
Reaktionszeit: 1465 min.

Beispiel 3

Zusammensetzung wie 1.
Umesterungskatalysator: 0,11 g Zirkoniumpropylat
Reaktionszeit: 1030 min
$M_n$=2956, f=1.80
Ausbeute 42,9 g.

Beispiel 4

Zusammensetzung wie 1.
Umesterungskatalysator: 0,2 g Lanthaniumisopropoxid
Reaktionszeit: 1130 min
$M_n$=3520, f=1.82
Ausbeute: 43,6 g.

Beispiel 5

Zusammensetzung: 80 ml THF, 1 ml (100%) Methacrylsäureanhydrid, 110 mg Ionol, 0,1 ml $HSbF_6$
Zugabe des Umesterungskatalysators 15 min nach der Initierung: 0,12 g Zirkoniumpropylat
Reaktionszeit: 270 min
Ausbeute: 48,4 g.

Beispiel 6

Vergleichsversuch
Zusammensetzung: 75 ml THF, 1 ml (100%) Methacrylsäureanhydrid, 110 mg Ionol, 0,1 ml $HSbF_6$.
Reaktionszeit: mehr als 420 min
Ausbeute: 47,6 g.

Beispiel 7

Zusammensetzung: 75 ml THF, 1 ml (88–90%) Methacrylsäureanhydrid[4], 110 mg Ionol, 0,15 ml $HSbF_6$

Reaktionszeit: 195 min.

Beispiel 8

Zusammensetzung wie Beispiel 7.
Zugabe von 0,11 g Zirkoniumprophylat 10 min. nach Initiierung
Reaktionszeit: 115 min.

Beispiel 9

Zusammensetzung wie Beispiel 7.
Umesterungskatalysator: 0,22 g Zirkoniumpropylat
Reaktionszeit: 105 min.

---

[1] $M_n$ = mittleres Molekulargewicht, bestimmt durch Dampfdruckosmometrie.

[2] f = Esterfunktionalität, bestimmt durch Titration der Säure nach Hydrolyse.

[3] bezogen auf eingesetztes Tetrahydrofuran (THF), abzüglich des eingebauten Anhydrids

[4] Methacrylsäureanhydrid, das 10–12% Methacrylsäure enthält.

## Patentanspruch

Verfahren zur Herstellung von Polytetrahydrofuranen mit Esterendgruppen, dadurch gekennzeichnet, dass man Tetrahydrofuran, gegebenenfalls in einem inerten organischen Lösungsmittel, in Anwesenheit von 0.05 bis 1 Gew.-%, bezogen auf Tetrahydrofuran, eines kationischen Initiators und Verbindungen von Übergangsmetallen als Umesterungskatalysator und von 0,1 bis 200 Gew.-%, bezogen auf Tetrahydrofuran, Acrylsäure- und Methacrylsäureanhydrid bei Temperaturen von –10 bis +70°C polymerisiert.

## Claim

Process for the preparation of polytetrahydrofurans containing ester end groups, characterised in that tetrahydrofuran, optionally in an inert organic solvent, is polymerised at temperatures of –10 to +70°C in the presence of 0.05 to 1% by weight, based on tetrahydrofuran, of a cationic initiator and compounds of transition metals as the transesterification catalyst and 0.1 to 200% by weight, based on tetrahydrofuran, of acrylic acid and methacrylic acid anhydride.

## Revendication

Procédé pour fabrication de polytétrahydrofurannes à groupes esters terminaux, caractérisé en ce que l'on polymérise le tétrahydrofuranne à des températures de –10 à 70°C, éventuellement dans un solvant organique inerte, en présence de 0,05 à 1% en poids, par rapport au tétrahydrofuranne, d'un inducteur cationique et de composés de métaux de transition comme catalyseur de transestérification et de 0,1 à 200% en poids, par rapport au tétrahydrofuranne, d'anhydride acrylique et d'anhydride méthacrylique.